# EUROPEAN PATENT SPECIFICATION

(11) **EP 1 661 133 B1**
(45) Date of publication and mention of the grant of the patent: **04.04.2018**
(21) Application number: 04764373.9
(22) Date of filing: 23.08.2004
(51) Int. Cl.: G11B 27/10, G11B 27/11, G11B 27/32, G06F 17/30

(54) **METHOD FOR RETRIEVING DATA FROM FIRST AND SECOND STORAGE MEDIUM**
VERFAHREN ZUM ABRUFEN VON DATEN AUS EINEM ERSTEN UND EINEM ZWEITEN SPEICHERMEDIUM
PROCEDE DE RECUPERATION DES DONNEES D'UN PREMIER ET D'UN SECOND SUPPORT D'ENREGISTREMENT

(30) Priority: 02.09.2003 EP 03090281
(43) Date of publication of application: 31.05.2006
(73) Proprietor: Thomson Licensing, 92130 Issy-les-Moulineaux (FR)
(72) Inventor: HÖRENTRUP, Jobst, 30163 Hannover (DE); ADOLPH, Dirk, 30952 Ronnenberg (DE); KOCHALE, Axel, 31832 Springe (DE); OSTERMANN, Ralf, 30657 Hannover (DE); HERPEL, Carsten, D-30974 Wennigsen (DE)
(74) Representative: Ståhl, Björn Niclas
(86) International application number: PCT/EP2004/009392
(87) International publication number: WO 2005/022537

(56) References cited:
- WO-A-01/90860
- US-A- 5 640 560
- US-A- 5 644 782
- US-B1- 6 604 236

## Description

### Field of the invention

This invention relates to a method for retrieving data from first and second storage medium.

### Background

Data on read-only storage media may not be modified. One example of such read-only media are prerecorded discs, e.g. Blu-ray discs (BDP).
Storage media, particularly optical discs, have usually unique identification labels. It is common that disc players may have integrated harddisk drives (HDD). Within an optical disc player, a Playback Control Engine (PCE) processes the data read from the disc. The data scope of a PCE is the disc. The playback process is controlled by a so-called Movie Module, which via an application interface (API) is connected to the PCE.

The data on the disc usually structured in a directory tree that is often standardized. E.g. for BDP the directory tree of a particular movie contains one folder for the playlist, one folder with streaming data and one folder for the clipinfo, describing the stream data structure. AV data on a BDP disc are contained in streams, which are multiplexed into a so-called main multiplex.

In this application, the term "directory tree" is used for a complete directory structure as well as for a particular branch of a directory structure, even hierarchical branches, when referring to rewritable media.

### Summary of the Invention

For optical disc formats, it is desirable to be able to download content from the studios server to the local player. Basically, there are two applications for downloaded content:
First, content on the disc shall be replaceable through downloaded content. A typical example is the replacement of an older or out-dated trailer that is stored on the disc through a downloaded trailer, e.g. for a new movie.
Second, content on the disc shall be completable or upgradable. A typical example is the download of a new subtitle track, e.g. in another language, which is not available on the disc.

There are two solutions to store downloaded content locally: This can either be realized through equipping the player with a separate local rewritable storage medium, e.g. a HDD, or through some rewritable memory on the disc itself. The first case is preferred, since media for the latter case are more expensive, and players are often equipped with a rewritable local storage medium.

When separate local storage is applied, i.e. integrated HDD, a mechanism is needed that combines or associates content on local storage with content on a disc. E.g. in case of a downloaded subtitle track, the player needs information to which disc the track belongs, and more specifically, to what content on that disc the track is associated.

US 5644782 A discloses a system having a virtual update capable read-only memory, includes a data storage system, and a device driver which interfaces with the data storage system. The data storage system includes a read-only memory device which stores primary data, and an auxiliary memory device which stores supplementary data reflecting updates to the primary data. The device driver has a read handler which provides a response to a read request consisting of a combination of primary data from the read-only memory device and supplementary data from the auxiliary memory device.

US 5640560 A discloses that a multimedia work stored on a CD-ROM is repurposed at run time to include changes and additions to the original work. Files required for repurposing the multimedia work are distributed on a floppy disk or CD-ROM for installation on the user's hard drive prior to execution of the multimedia work on a personal computer.

The present invention provides a mechanism to associate off-disc content, e.g. downloaded from the internet and stored on a HDD, with content on the disc, on-disc content.

The basic idea of the invention is to create a directory tree for each disc on the local storage device (off-disc directory tree). As soon as a disc is inserted into the player, the on-disc directory tree and the associated off-disc directory tree are logically merged. The association is provided through unique disc identifiers or unique content identifiers. Playback of content on the inserted disc involves the merged directory tree. In this way, content on local storage is seamlessly integrated.

Appropriate merge rules provide the possibility to update on-disc content with off-disc content. Technically, this is achieved through logically replacing an on-disc file with an off-disc file. The invention also allows supplementing on-disc content with off-disc content. This is achieved through logically adding an off-disc file to an on-disc directory. Two modes are possible for determining which on-disc file should be replaced by an off-disc file: either replacement is only done if the file names match exactly, or replacement is done if a particular mapping method is defined for mapping off-disc file names to on-disc file names, e.g. an off-disc file named "b.clpi" may replace an on-disc file named "a.clpi" if in the corresponding directories there is only one file available with the file name extension "clpi".

According to the invention, data are retrieved from a first and a second storage medium and combined, or merged, such that a logical directory tree is generated that contains the data of both media. The logical directory tree contains files that are available only in the first or the second directory tree, and for files that are available in both directory trees the version available from the second directory tree.

Particularly, the disclosed method for retrieving data from first and second storage medium, wherein the data on the first storage medium are stored as files structured in a first directory tree, and the data stored on the second storage medium are stored as files structured in a second directory tree, comprises that the first storage medium has an identification label attached, and a branch of the second directory tree stored on the second storage medium refers to the identification label, further that the branch of the second directory tree is a subset of the first directory tree, or identical with the first directory tree, further that a logical directory tree is constructed from the retrieved data, wherein the structure of the logical directory tree is identical with the structure of the first directory tree, further that files that are available only in the first or the second directory tree are also available in the logical directory tree, and finally that for files that are available in the first and the second directory tree, the version available from the second directory tree is available in the logical directory tree.

### Brief description of the drawings

Exemplary embodiments of the invention are described with reference to the accompanying drawings, which show in
Fig.1 the structure of an exemplary directory tree for BDP;
Fig.2 the structure of an exemplary local storage directory;
Fig.3 an exemplary merge operation;
Fig.4 and example for binding information carried in file names;
Fig.5 an example for binding information carried in folder names.

### Detailed description of the invention

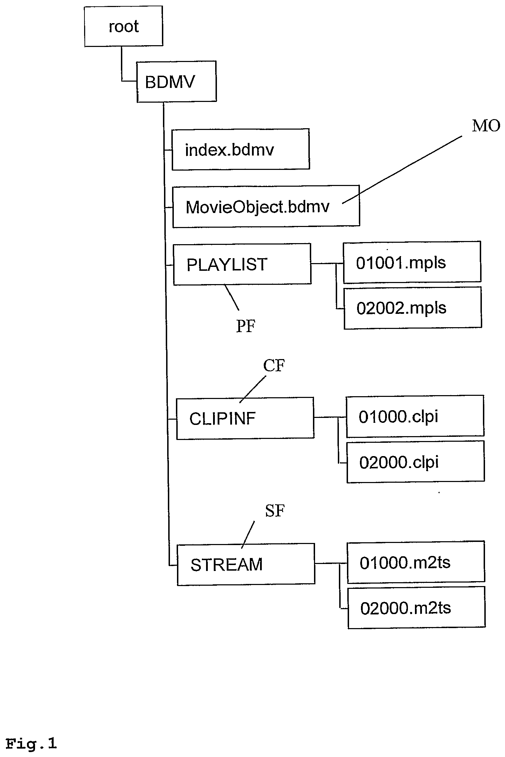

Data on optical discs are usually organized in files, which in turn are organized in a standardized directory tree, the on-disc directory tree. The file system provides an abstraction from the underlying storage medium. An exemplary standardized on-disc directory tree is shown in Fig.1. It contains for a certain movie object MO a playlist folder PF, a clipinfo folder CF and a data stream folder SF. Each of these folders contains files with file extensions that identify the file type, e.g. "mpls" for playlist files.

The basic idea of the invention is to create a directory tree for a disc on a rewritable local storage device, so that an off-disc directory tree is created. As soon as a disc is inserted into the player, the on-disc directory tree is merged with the associated off-disc directory tree. In case there is no off-disc directory tree on the local storage device, e.g. when the disc is inserted into the player for the first time, an empty off-disc directory tree is created, according to the employed standard.

Any disc provides a unique identifier. This can either be a unique disc ID or a unique content ID. There may be several directory trees provided on the local storage device for various discs, e.g. one branch for each disc that was ever inserted into the player. The local storage device holds additional information, which associates one of the directory trees, or rather one branch of the directory tree of the local storage device, with a disc. Preferably, the off-disc directory tree's top-level name is derived from the disc ID. In the simplest case, the name directly corresponds to the ID.

In general, the structure of the off-disc-tree is arbitrary. Additional rules specify, how each off-disc-folder is merged into the on-disc-tree. Preferably for simplicity and practical reasons, the off-disc directory tree is similarly structured as the on-disc directory tree.

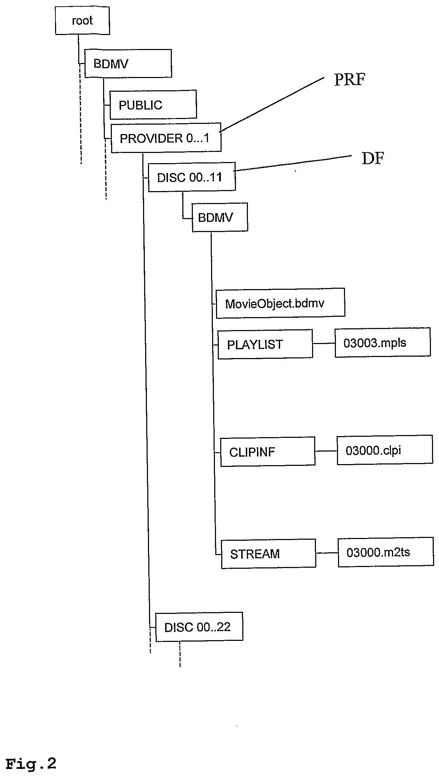

An option to further speed-up the search for off-disc content is possible through the usage of unique provider identifiers. In addition to the unique disc/content identifier, this unique identifier is also provided with the disc. For each provider, or each provider from which the player ever read a disc, there is a directory created on the local storage device. The corresponding folder name is derived from the provider ID. In the simplest case, the name directly corresponds to the ID. Any off-disc-tree is then created as a subdirectory in the associated provider directory. This grouping has the advantage of speeding up the search process to find off-disc content, as only the provider's directory has to be searched for off-disc content. An exemplary directory structure is shown in Fig.2. The data referring to a disc from a certain provider are stored in a disc folder DF which in turn is stored in a provider folder PRF.

In a scenario where applications need a direct and explicit application programming interface (API) to local storage, this structure has additional advantages. Particularly, the proposed hierarchical structure can easily serve as a basis for access rights management. Simple rules can be established that restrict an applications access to local storage.

For example, a possible rule could allow an application on a disc labelled XY, published by a provider named Z, to read and write to the associated off-disc directory named XY, and read, but not write, from any other directories within publisher Z's directory tree, while access to any other directories on local storage is forbidden.

For any downloaded type of content, the storage location on local storage is specified and the player knows where additional downloaded content can be found on the local storage device. When downloading streams, the stream itself and also corresponding information about the stream file is stored.

Merging the off-disc directory tree with the on-disc directory tree allows the unified handling of off-disc content and on-disc content within the player at playback.

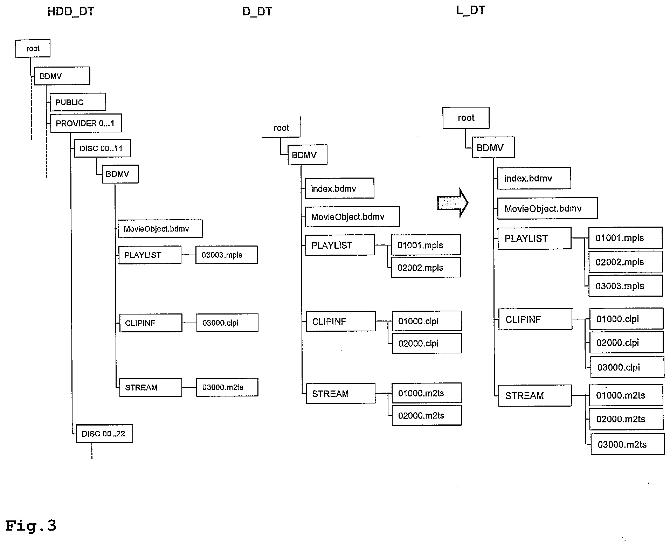

An exemplary merge operation is shown in Fig.3. Data from a directory tree HDD_DT from a HDD and data from a directory tree D_DT from a read-only disc are merged to a logical directory tree L_DT that is used by the PCE of the player. The logical directory tree L_DT is constructed temporarily at run-time.

The inventive method has the particular advantage that the interface between the Movie Module and the PCE may remain unchanged as compared to today's standard. The merge operation rules are as follows:
When merging two directories, files in the off-disc directory are added to the files in the on-disc directory. This allows adding content at playback time.
When merging two directories, and the same file exists in the off-disc directory as well as in the on-disc directory, the file in the off-disc directory takes precedence. This allows replacing content from the disc by other data at playback time, e.g. new subtitles or an enhanced audio stream.

The application of downloading additional A/V components, e.g. audio or subtitle tracks, requires additional information. Binding information is needed to associate the downloaded track not only with the disc, but also with the corresponding main multiplex on the disc.

It is assumed that the downloaded off-disc stream and the associated on-disc main multiplex have the same length on the timeline. In other cases additional information needs to be provided that describe where on the timeline the downloaded track is associated with the main multiplex.

To associate the off-disc component with the main on-disc multiplex, two methods are described in the following:
Method 1:
   The off-disc components file name obey the following rules:
      - The first part identifies the main multiplex and associates the component with it. It is thus the same for all associated components.
      - The second part, preferably separated from the first part through an underscore, must be unique among all additional components of the main multiplex.
      - Information files are also stored in a separate folder, whose names are derived from the off-disc component.

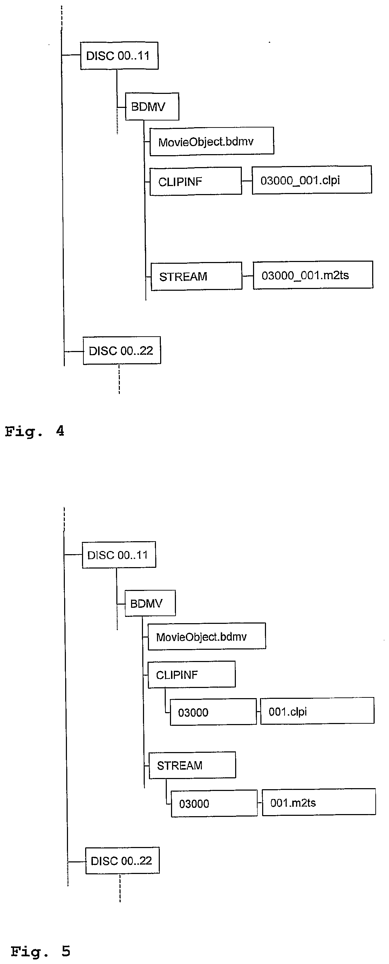

   An example is shown in Fig.4. The first part 0300 of the clipinfo file and the stream file associates the files with the main multiplex, while the second part 001 is unique among the two shown additional components.
Method 2:
   In this method, binding information is provided through the use of appropriate sub-directories
      - Off-disc components associated with an on-disc multiplex are stored in a separate folder, whose name is derived from the main multiplex on the disc.
      - All off-disc information files are also stored in a separate folder, whose name is derived from the main multiplex on the disc.
      - File names must be unique among all additional components of the main multiplex.

An example is shown in Fig.5. A clipinfo file 001.clpi and a stream data file 001.m2ts are stored in subdirectories 03000, being subdirectories of the clipinfo folder and the stream folder respectively. The file names 001 are derived from the main multiplex on the disc.

The inventive method may use any type of rewritable media to add data to any type of read-only media. Examples for rewritable media are magnetic storage devices, such as HDDs, floppies, RAM modules or the like. Examples for read-only media are DVD-R/+R or prerecorded Blu-ray discs (BDP).

In principle, the disclosed method is also suitable for updating or complementing data stored on a read-only medium by data from another read-only medium.

As a preferred embodiment, data stored on a BDP may be updated or complemented by data stored on a HDD.

## Claims

1. A method for generating a playback content based on data retrieved from a first read-only storage medium and data retrieved from a second rewritable storage medium, wherein the data on the first storage medium are stored as files structured in a first directory tree (D_DT), and the data stored on the second storage medium are stored as files structured in a second directory tree (HDD_DT), wherein the first storage medium has a first identification label and a second identification label stored thereon and wherein a first branch (PRF) of the second directory tree has a name corresponding to the first identification label and a second branch (DF) of the second directory tree has a name corresponding to the second identification label and the second branch is a subbranch of said first branch, the method comprising the steps of:
- constructing a logical directory tree (L_DT) from the first directory tree and the second branch of the second directory tree, such that:
(a) the logical directory tree has the same structure as the first directory tree,
(b) files (index.bdvm, 03003.mpls) that are available only in the first directory tree or the second branch of the second directory tree are also available in the logical directory tree, and
(c) for files that are available in the first directory tree and the second branch of the
second directory tree (MovieObject.bdvm), the version available from the second branch of the second directory tree is available in the logical directory tree;
- retrieving data from the first and second storage medium according to the logical directory tree; and
- generating a playback content based on said retrieved data, wherein said data from the first and the second storage medium are seamlessly integrated.

## Patentansprüche

1. Verfahren zum Erzeugen eines Wiedergabeinhalts auf der Grundlage von Daten, die aus einem ersten, einem Nur-Lese-Speichermedium ausgelesen werden, und von Daten, die aus einem zweiten, einem wiederbeschreibbaren Speichermedium ausgelesen werden, wobei die Daten in dem ersten Speichermedium als Dateien gespeichert sind, die in einem ersten Verzeichnisbaum (D_DT) strukturiert sind, und wobei die Daten in dem zweiten Speichermedium als Dateien gespeichert sind, die in einem zweiten Verzeichnisbaum (HDD_DT) strukturiert sind, wobei das erste Speichermedium ein erstes Kennzeichnungsetikett und ein zweites Kennzeichnungsetikett, die darin gespeichert sind, aufweist und wobei ein erster Zweig (PRF) des zweiten Verzeichnisbaums einen Namen aufweist, der dem ersten Kennzeichnungsetikett entspricht, und wobei ein zweiter Zweig (DF) des zweiten Verzeichnisbaums einen Namen aufweist, der dem zweiten Kennzeichnungsetikett entspricht, und wobei der zweite Zweig ein Teilzweig des ersten Zweigs ist, wobei das Verfahren die folgenden Schritte umfasst:
- Konstruieren eines logischen Verzeichnisbaums (L_DT) aus dem ersten Verzeichnisbaum und aus dem zweiten Zweig des zweiten Verzeichnisbaums in der Weise, dass:
(a) der logische Verzeichnisbaum dieselbe Struktur wie der erste Verzeichnisbaum aufweist,
(b) Dateien (index.bdvm, 03003.mpls), die nur in dem ersten Verzeichnisbaum oder in dem zweiten Zweig des zweiten Verzeichnisbaums verfügbar sind, ebenfalls in dem logischen Verzeichnisbaum verfügbar sind, und
(c) für Dateien, die in dem ersten Verzeichnisbaum und in dem zweiten Zweig des zweiten Verzeichnisbaums verfügbar sind (MovieObject.bdvm), die Version, die von dem zweiten Zweig des zweiten Verzeichnisbaums verfügbar ist, in dem logischen Verzeichnisbaum verfügbar ist;
- Auslesen von Daten aus dem ersten und aus dem zweiten Speichermedium in Übereinstimmung mit dem logischen Verzeichnisbaum; und
- Erzeugen eines Wiedergabeinhalts auf der Grundlage der ausgelesenen Daten, wobei die Daten aus dem ersten und aus dem zweiten Speichermedium nahtlos integriert sind.

## Revendications

1. Procédé pour générer un contenu de lecture basé sur des données récupérées d'un premier support de stockage en lecture seule et des données récupérées d'un second support de stockage réinscriptible, dans lequel les données du premier support de stockage sont stockées sous forme de fichiers structurés dans une première arborescence de répertoires (D_DT), et les données stockées sur le second support de stockage sont stockées sous forme de fichiers structurés dans une seconde arborescence de répertoires (HDD_DT), où une première étiquette d'identification et une seconde étiquette d'identification sont stockées sur le premier support de stockage et où une première branche (PRF) de la seconde arborescence de répertoires possède un nom correspondant à la première étiquette d'identification et une seconde branche (DF) de la seconde arborescence de répertoires possède un nom correspondant à la seconde étiquette d'identification et la seconde branche est une sous-branche de ladite première branche, le procédé comprenant les étapes suivantes :
- construction d'une arborescence de répertoires logique (L_DT) à partir de la première arborescence de répertoires et de la seconde branche de la seconde arborescence de répertoires, de sorte que :
(a) l'arborescence de répertoires logique possède la même structure que la première arborescence de répertoires,
(b) les fichiers (index.bdvm, 03003.mpls) qui sont disponibles uniquement dans la première arborescence de répertoires ou la seconde branche de la seconde arborescence de répertoires soient également disponibles dans l'arborescence de répertoires logique, et
(c) pour les fichiers qui sont disponibles dans la première arborescence de répertoires et la seconde branche de la seconde arborescence de répertoires (MovieObject.bdvm), la version disponible à partir de la seconde branche de la seconde arborescence de répertoires soit disponible dans l'arborescence de répertoires logique ;
- récupération de données du premier et du second supports de stockage selon l'arborescence de répertoires logique ; et
- génération d'un contenu de lecture basé sur lesdites données récupérées, où lesdites données du premier et du second supports de stockage sont intégrées de façon transparente.
